(19) Europäisches Patentamt
European Patent Office
Office européen des brevets

(11) **EP 3 314 699 B1**

## (12) EUROPEAN PATENT SPECIFICATION

(45) Date of publication and mention
of the grant of the patent:
**16.09.2020 Bulletin 2020/38**

(21) Application number: **15736215.3**

(22) Date of filing: **25.06.2015**

(51) Int Cl.:
*H04B 7/0413* (2017.01)      *H04B 7/06* (2006.01)
*H01Q 25/00* (2006.01)

(86) International application number:
**PCT/EP2015/064472**

(87) International publication number:
**WO 2016/206750 (29.12.2016 Gazette 2016/52)**

(54) **INTERFERENCE MITIGATION IN MULTIPLE INPUT MULTIPLE OUTPUT SYSTEMS**

INTERFERENZVERRINGERUNG IN SYSTEMEN MIT MEHREREN EIN- UND AUSGÄNGEN

ATTÉNUATION D'INTERFÉRENCES DANS DES SYSTÈMES À ENTRÉES ET SORTIES MULTIPLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.05.2018 Bulletin 2018/18**

(73) Proprietor: **Telefonaktiebolaget LM Ericsson
(publ)
164 83 Stockholm (SE)**

(72) Inventors:
• **OLSSON, Bengt-Erik
S-436 55 Hovås (SE)**
• **BAO, Lei
S-412 64 Göteborg (SE)**

(74) Representative: **Ericsson
Patent Development
Torshamnsgatan 21-23
164 80 Stockholm (SE)**

(56) References cited:
**WO-A1-2013/097888     US-B2- 7 948 444**

• **TSUGUO MARU ET AL: "PHY 44-1 - Line-of-Sight
MIMO Transmission for Achieving High Capacity
Fixed Point Microwave Radio Systems",
WIRELESS COMMUNICATIONS AND
NETWORKING CONFERENCE, 2008. WCNC
2008. IEEE, IEEE, PISCATAWAY, NJ, USA, 31
March 2008 (2008-03-31), pages 1137-1142,
XP031243790, ISBN: 978-1-4244-1997-5**

**Description**

**TECHNICAL FIELD**

Embodiments presented herein relate to multiple input multiple output systems, and particularly to a method, and an antenna arrangement for method for adjusting an antenna arrangement for mitigating interference in a line of sight multiple input multiple output system.

**BACKGROUND**

In communications networks, there may be a challenge to obtain good performance and capacity for a given communications protocol, its parameters and the physical environment in which the communications network is deployed.

For example, wireless communication systems today often utilize spatial multiple-input-multiple-output (MIMO) technologies for increasing transmission capacity. MIMO technologies enable multiple physical communication paths (as commonly available in indoor and urban environments) between transmitter and receiver to be utilized by means of reflections and diffraction in obstacles. Wireless communication systems utilizing MIMO technologies must operate in non-line-of-sight (NLOS) in order to provide multiple communication spatial paths between transmitter and receiver. Today, MIMO technologies are utilized in e.g. wireless local area network (WLAN) standards such as Wi-Fi and mobile data systems such as long term evolution (LTE).

On the contrary, conventional microwave point-to-point (PtP) communications systems usually operate with line of sight (LOS) between transmitter and receiver and obtaining advantages of MIMO technologies are therefore not directly possible. However, by separating multiple radio antennas properly in vertical and/or horizontal dimension the requirements of orthogonally between communications paths can be created in order to increase capacity by means of MIMO technologies. In general terms, the required antenna separation depends on the carrier frequency and path length $D_1$. High carrier frequencies allow smaller antenna separation compared to low carrier frequencies. At low carrier frequencies, say $f = 10$ GHz, the antenna separations must be in the range of 10 meters or more to obtain full orthogonality between the MIMO channels, while at say $f = 80$ GHz, the required antenna separation is in the range of just a few meters; as the skilled person understands the antenna separation also depends on the path length $D_1$.

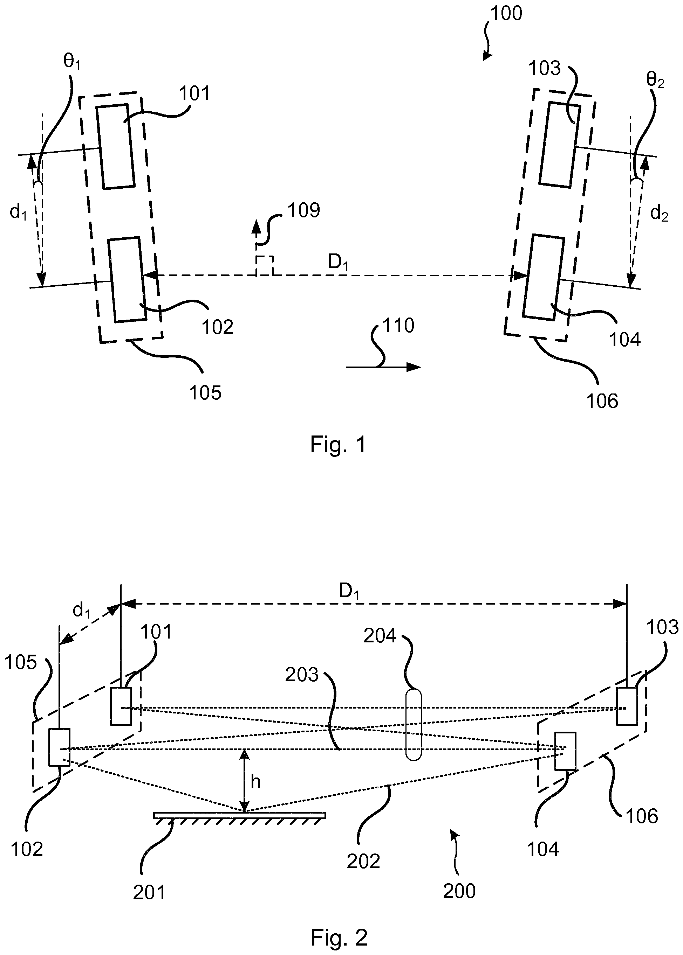

Figure 1 exemplifies a 2-by-2 LOS-MIMO system 100 comprising a first antenna arrangement 105 and a second antenna arrangement 106. The first antenna arrangement 105 comprises two antennas 101, 102 separated by a distance $d_1$. The second antenna arrangement 106 comprises two antennas 103, 104 separated by a distance $d_2$. The first antenna arrangement 105 and the second antenna arrangement 106 are separated by a distance $D_1$. It should be noted that Figure 1 is not drawn to scale. Thus, in a real life scenario, the distance $D_1$ is several orders of magnitude larger than the distances $d_1$ and $d_2$. In order to obtain perfect orthogonality between the two paths (i.e. the direct path between antenna 101 and antenna 103, and the direct path between antenna 102 and antenna 104) the following condition must de satisfied:

$$d_1 \cdot d_2 = \frac{D_1 \cdot c}{2f}, \qquad\qquad (1)$$

where $D_1$ *is* the distance between transmitter and receiver, $f$ is the carrier frequency, and c is the speed of light in air. For long links, e.g. many kilometers, the distances $d_1$ and $d_2$ between the antennas will become rather large, e.g. the required antenna separation for a 5 km link operating at 8 GHz will be in the order of 10 m if $d_1$ equals $d_2$. In reality the LOS-MIMO system can operate with less antenna separation but with an associated penalty in performance and despite this penalty, a small antenna separation is often preferred due to cost efficiency. For systems with more MIMO channels (as realized by each antenna arrangement in the MIMO system comprising more than two antennas each), the total physical dimension of the antenna array increases further and for low frequencies it will be unrealistic to mount all antennas on a single mast unless a sub-optimal antenna separation is used.

The sub-optimum antenna separation leads to a loss in MIMO gain which affects the maximum hop-length for a given output power and availability requirement, i.e. it reduces the possible system gain in the links. This can in many link designs be acceptable given the benefits of increased link capacity. Another issue is that a MIMO system with sub-optimum antenna separations is more sensitive to multi-path interference compared to a MIMO system operating with close to optimum antenna separation.

Figure 2 exemplifies a similar 2-by-2 LOS-MIMO system 200 as the LOS-MIMO system 100 of Figure 1. The LOS-MIMO system 200 thus comprises a first antenna arrangement 105 comprising two antennas 101, 102 separated by a distance $d_1$ and a second antenna arrangement 106 comprising two antennas 103, 104 separated by a distance $d_2$. Figure 2 further illustrates the principle of a two ray multi-path interference where in addition to the four MIMO paths 204 a second path 202 is present because of an interfering object 201, e.g. a flat roof or water surface. The object 201 may be embodied by any surface or obstacle with a suitable position that enables coupling of energy between antennas at different antenna arrangements. The object 201 may further be constituted by atmospheric layering during, e.g., calm weather. The object 201 is assumed to be located a distance h from the direct link 203 between antenna 102 and antenna 104. Such interference can also be present in conventional single input single output (SISO) links but in this case only the amplitude variation is critical since the associated phase disturbances are mitigated by the carrier recovery algorithm in the receiver. In order to give rise to problem in the receiving antenna, the interfering beam should have about the same power level as the main beam, which in reality is rare. However, at least some LOS MIMO systems require a certain phase shift, a so called MIMO phase, between the different paths, and the multi-path interference may affect the four MIMO paths 204 differently. In this case the MIMO phase will be modified even at very low interference levels. Figure 2 shows the simplest case where only one of the MIMO paths is affected by multi-path. In reality all beams may suffer from multi-path interference created by reflections at different positions. In case of perfect reflection symmetry, i.e. where all MIMO paths are reflected at the same height, the multi-path interference does not affect the MIMO phase but rather create conventional flat-fading, which is the same for all paths.

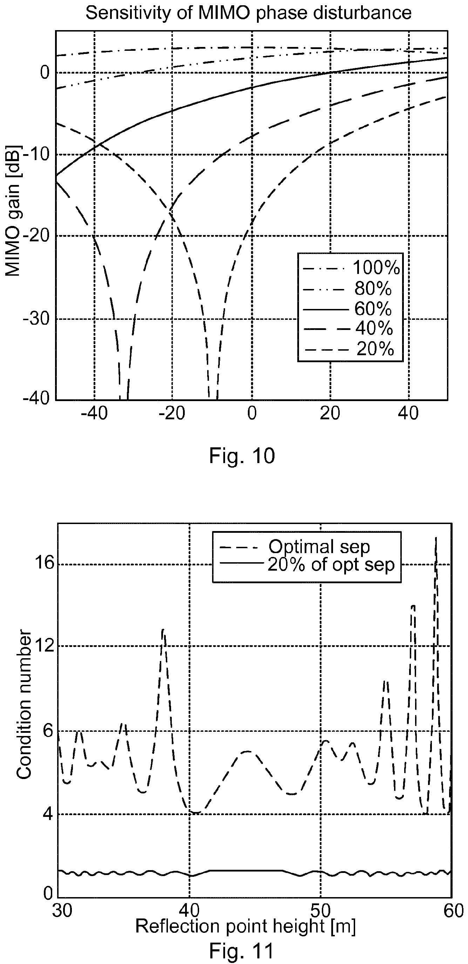

Figure 10 shows the variation in MIMO penalty, i.e. loss in system gain, for a link with interference from a second path with -20 dB lower power and varying phase in the case of optimal antenna separation and between 20% and 100% of optimal antenna separation. From Figure 10 it is clear that the system operating at 20% to 40% of optimal separation is much more sensitive to phase fluctuations in the interfering signal than a system operating at 60% to 100% optimal antenna separation.

One mechanism to avoid effects as illustrated in Figure 10 could be to design the LOS MIMO system with close to optimum antenna separation, but this is in many situations not possible or economically viable. Another mechanism is to avoid multi-path interference by deploying the LOS MIMO system in an environment such the link is not in the vicinity of any buildings, open flat surfaces such as water, or other obstacles. This can be obtained by using very high masts but in reality this may be difficult and expensive to achieve, especially in urban environment with very strict installation requirements.

US 7948444 B2 discloses a method and system for configuring an antenna for line of sight (LOS) communication procedures being implemented for providing low error rates at moderate transmission power. The antenna is configured for a particular communications distance over line of sight links providing multiple-input multiple-output communication links, including radio links and optical wireless communications links.

WO 2013/097888 A1 relates to a node in a line-of-sight wireless communication link.

The node comprises at least a first antenna and a second antenna, adjacent antennas being mounted at a certain distance from each other. The node further comprises a signal processing unit and a local oscillator. The local oscillator is arranged for demodulating received signals from a first frequency, the signals being received by the antennas at the first frequency. The demodulated signals are handled by the signal processing unit.

TSUGUO MARU et al in "PHY 44-1 - Line-of-Sight MIMO Transmission for Achieving High Capacity Fixed Point Microwave Radio Systems", 31 March 2008, propose line-of-sight MIMO systems where spatially orthogonal MIMO channels are constructed by using geometric arrangements antennas and can use individual local oscillator signals without feedback signals for a transmit matrix.

Hence,

there is still a need for an improved adjustment of an antenna arrangement for a LOS MIMO system.


## SUMMARY

An object of embodiments herein is to provide efficient improved adjustment of an antenna arrangement for a LOS MIMO system.

According to a first aspect there is presented a method for adjusting an antenna arrangement for mitigating interference in a line of sight multiple input multiple output system. The antenna arrangement comprises at least two antennas. The method comprises adjusting a distance between two antennas of the antenna arrangement by an adjustment distance to compensate for interference caused by at least one reflection occurring along a line of sight link from the antenna arrangement to antennas intended to communicate with the antenna arrangement.

Advantageously this provides efficient improved adjustment of an antenna arrangement for a LOS MIMO system.

Advantageously this enables a LOS MIMO system to be operated more stable with sub-optimal antenna separation during interference from reflections in obstacles. Advantageously this enables constant multi-path interference to be identified directly after installation of the antenna arrangement.

According to a second aspect there is presented an antenna arrangement for mitigating interference in a line of sight multiple input multiple output system. The antenna arrangement comprises at least two antennas. The antenna arrangement is configured to enable adjustment of a distance between two antennas of the antenna arrangement by an adjustment distance to compensate for interference caused by at least one reflection occurring along a line of sight link from the antenna arrangement to antennas intended to communicate with the antenna arrangement.

According to a third aspect there is presented a computer program for adjusting an antenna arrangement for mitigating interference in a line of sight multiple input multiple output system, the computer program comprising computer program code which, when run on an antenna arrangement, causes the antenna arrangement to perform a method according to the first aspect.

According to a fourth aspect there is presented a computer program product comprising a computer program according to the third aspect and a computer readable means on which the computer program is stored.

It is to be noted that any feature of the first, second, third and fourth aspects may be applied to any other aspect, wherever appropriate. Likewise, any advantage of the first aspect may equally apply to the second, third, and/or fourth aspect, respectively, and vice versa. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

## BRIEF DESCRIPTION OF THE DRAWINGS

The inventive concept is now described, by way of example, with reference to the accompanying drawings, in which:

Figure 1 is a schematic diagram illustrating a LOS MIMO system according to embodiments;

Figure 2 is a schematic diagram illustrating a LOS MIMO system according to embodiments;

Figure 3 is a schematic diagram showing a network node comprising an antenna arrangement according to an embodiment;

Figure 4 is a schematic diagram showing antenna separation according to an embodiment;

Figure 5 is a schematic diagram showing functional units of an antenna arrangement according to an embodiment;

Figure 6 is a schematic diagram showing functional modules of an antenna arrangement according to an embodiment;

Figure 7 shows one example of a computer program product comprising computer readable means according to an embodiment;

Figures 8 and 9 are flowcharts of methods according to embodiments; and

Figures 10-15 provide simulation results according to embodiments.

## DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step illustrated by dashed lines should be regarded as optional.

As outlined above, multi-path interference in a LOS MIMO system can either improve or deteriorate the orthogonality of the MIMO channels. At least some of the herein disclosed embodiments are based on providing means for manipulating the interference condition of the multiple paths such that the MIMO orthogonality is improved by the presence of multiple paths.

Consider again the LOS MIMO system 200 of Figure 2 with a horizontal antenna separation corresponding to, say 40%, of optimal separation. Assume initially that during normal operation the reflection path (as caused by object 201) between antenna 102 and antenna 104 does not exist and the LOS MIMO system 200 is running according to design. Assume then that the object 201 is inserted. Object 201 may, for example be the result of water being collected in a small pond on a roof of a building somewhere below the propagation paths of the MIMO channels. Because of reflections in the object 201 the dashed path in Figure 2 is created, causing a shift in the MIMO phase condition. When the rain stops, the water pond will eventually dry out after some time (hence removing the object 201) and the dashed path in Figure 2 disappears.

Since the LOS MIMO system 200 is operating at sub-optimal antenna separation (see, Figure 10) it is highly likely that the functionality of the LOS MIMO system 200 will be degraded; it may even stop working properly, provided that the added interference shifts the MIMO phase condition towards a worse condition. If, on the other hand, the phase condition is improved by the interference additional system margin can be gained. This system margin may improve performance of the LOS MIMO system 200 and to some extent combat the impact of added path loss by the object 201. In the present scenario the object 201 will always be present at the same position once the interference occur (i.e., during rain) and hence the performance change will always be similar once the interference occur for a fixed link.

Hence, it may be advantageous to manipulate the phase difference between the main beam and the beam reflected by the object 201 such that the interference has positive impact on the LOS MIMO system 200. One way to manipulate the interference condition is to slightly move one of the antennas 102, 104 involved in the reflected path. Moving antenna 102 in Figure 2 in vertical direction would change the difference in path length of the direct path to antenna 104 and the reflected path going from antenna 102 - object 201- antenna 104. Thus, antenna 102 or 104 should be moved such that the MIMO condition or the entire MIMO system performance is optimized. In the situation illustrated above, the LOS MIMO system 200 should thus be optimized with the object 201 present; but no further adjustments are needed as long as the object 201 is still present.

Particularly, the embodiments disclosed herein relate to adjusting an antenna arrangement for mitigating interference in a LOS MIMO system. In order to obtain such adjusting there is provided an antenna arrangement, a method, and a computer program comprising code, for example in the form of a computer program product, that when run on a the antenna arrangement, causes the antenna arrangement to perform the method.

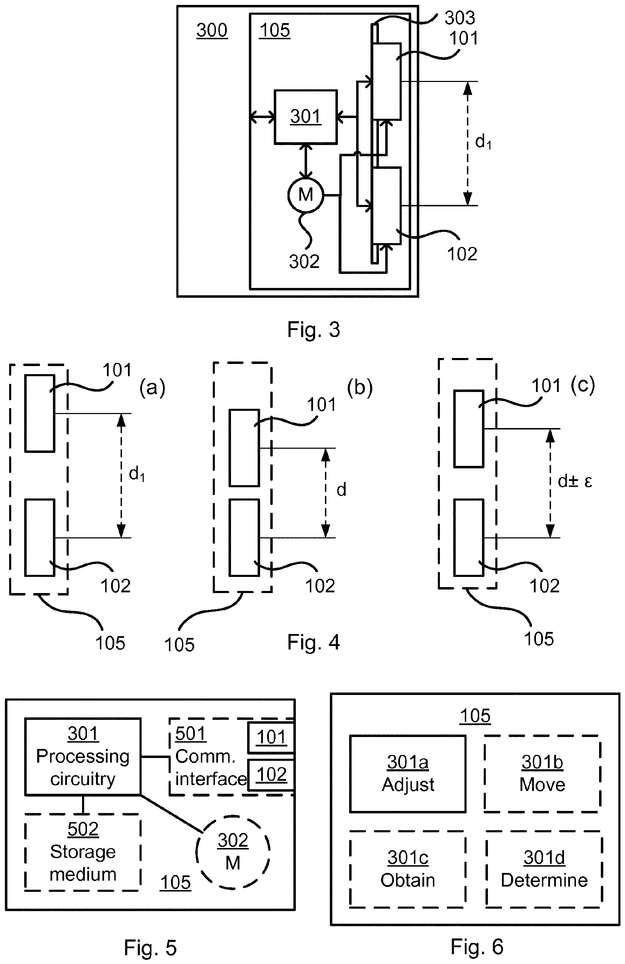

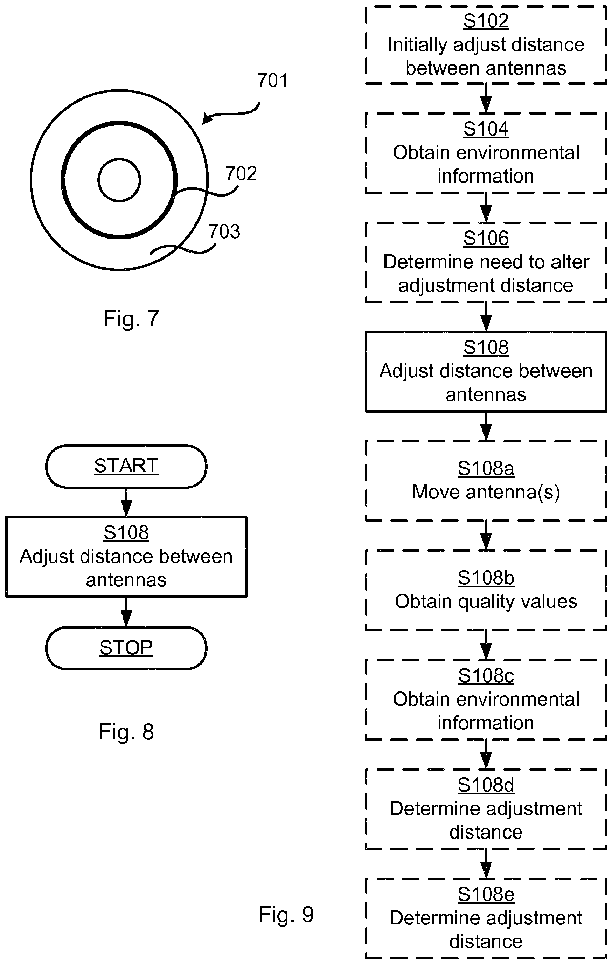

Figure 5 schematically illustrates, in terms of a number of functional units, the components of an antenna arrangement 105 according to an embodiment. Processing circuitry 301 is provided using any combination of one or more of a suitable central processing unit (CPU), multiprocessor, microcontroller, digital signal processor (DSP), application specific integrated circuit (ASIC), field programmable gate arrays (FPGA) etc., capable of executing software instructions stored in a computer program product 701 (as in Figure 7), e.g. in the form of a storage medium 502.

Particularly, the processing circuitry 301 is configured to cause the antenna arrangement 105 to perform a set of operations, or steps, S102-S108e. These operations, or steps, S102-S108e will be disclosed below. For example, the storage medium 502 may store the set of operations, and the processing circuitry 301 may be configured to retrieve the set of operations from the storage medium 502 to cause the antenna arrangement 105 to perform the set of operations. The set of operations may be provided as a set of executable instructions. Thus the processing circuitry 301 is thereby arranged to execute methods as herein disclosed. The storage medium 502 may also comprise persistent storage, which, for example, can be any single one or combination of magnetic memory, optical memory, solid state memory or even remotely mounted memory.

The antenna arrangement 105 may further comprise a communications interface 501 for communications with another antenna arrangement 105. As such the communications interface 501 comprise one or more transmitters and receivers, comprising analogue and digital components and a suitable number of antennas 101, 102 for wireless communications and ports for wireline communications.

The antenna arrangement 105 may further comprise a motor 302. The motor 302 may be configured to, upon receiving a control signal from the processing circuitry 301, move at least one of the antennas 101, 102.

The processing circuitry 301 controls the general operation of the antenna arrangement 105 e.g. by sending data and control signals to the communications interface 501, the storage medium 502 and the motor 302, by receiving data and reports from the communications interface 22, and by retrieving data and instructions from the storage medium 502. Other components, as well as the related functionality, of the antenna arrangement 105 are omitted in order not to obscure the concepts presented herein.

Figure 6 schematically illustrates, in terms of a number of functional modules, the components of an antenna arrangement 105 according to an embodiment. The antenna arrangement 105 of Figure 6 comprises a number of functional modules, and particular an adjust module 301a configured to perform below steps S102, S108. The antenna arrangement 105 of Figure 6 may further comprises a number of optional functional modules, such as any of a move module 301b configured to perform below step S108a, an obtain module 301c configured to perform below steps S104, S108b, S108c, and a determine module 301d configured to perform below step S106, S108d, S108e. The functionality of each functional module 301a-301d will be further disclosed below in the context of which the functional modules 301a-301d may be used. In general terms, each functional module 301a-301d may be implemented in hardware or in software. Preferably, one or more or all functional modules 301a-301d may be implemented by the processing circuitry 301, possibly in cooperation with functional units 501, 502, and/or 302. The processing circuitry 301 may thus be arranged to from the storage medium 502 fetch instructions as provided by a functional module 301a-301d and to execute these instructions, thereby performing any steps as will be disclosed hereinafter.

The antenna arrangement 105 may be provided as a standalone device or as a part of a further device. For example, the antenna arrangement 105 may be provided in a network node, such as a radio access network (e.g., a radio base station, a base transceiver station, a node B, an evolved node B, or an access point). Figure 3 illustrates a network node 300 comprising an antenna arrangement 105 as herein disclosed. The antenna arrangement 105 comprises processing circuitry 301, a motor 302, two antennas 101, 102, and a ladder rack or fixture 303 on which the two antennas 101, 102 are movably arranged. The antenna arrangement 105 may be provided as an integral part of the network node 300. That is, the components of the antenna arrangement 105 may be integrated with other components of the network node 300; some components of the network node 300 and the antenna arrangement 105 may be shared. For example, if the network node 300 as such comprises processing circuitry, this processing circuitry may be arranged to perform the actions of the processing circuitry 301 of with the antenna arrangement 105. Alternatively the antenna arrangement 105 may be provided as a separate unit in the network node 300.

Figure 7 shows one example of a computer program product 701 comprising computer readable means 703. On this computer readable means 703, a computer program 702 can be stored, which computer program 702 can cause the processing circuitry 301 and thereto operatively coupled entities and devices, such as the communications interface 501, the storage medium 502, and motor 302, to execute methods according to embodiments described herein. The computer program 702 and/or computer program product 701 may thus provide means for performing any steps as herein disclosed.

In the example of Figure 7, the computer program product 701 is illustrated as an optical disc, such as a CD (compact disc) or a DVD (digital versatile disc) or a Blu-Ray disc. The computer program product 701 could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 702 is here schematically shown as a track on the depicted optical disk, the computer program 702 can be stored in any way which is suitable for the computer program product 701.

Figures 8 and 9 are flow chart illustrating embodiments of methods for adjusting an antenna arrangement 105 for mitigating interference in a LOS MIMO system. The methods are advantageously provided as computer programs 702.

Reference is now made to Figure 8 illustrating a method for adjusting an antenna arrangement 105 for mitigating interference in a LOS MIMO system according to an embodiment. The antenna arrangement 105 comprises at least two antennas 101, 102.

As noted above, one way to manipulate the interference condition is to slightly move one of the antennas 102, 104 involved in the reflected path. It is envisioned that the interference condition between the main path and the interfering path can be optimized by slightly one or more antennas 101, 102 of the antenna arrangement 105 being moved such that the interference improves the MIMO condition, i.e. such that the interfering signal pushes the MIMO phase towards the optimum.

The method comprises adjusting, S108, a distance $d_1$ between two antennas 101, 102 of the antenna arrangement 105. The distance $d_1$ is adjusted by an adjustment distance $\varepsilon$. The adjustment is performed to compensate for interference caused by at least one reflection (by an object 201) occurring along a line of sight (LOS) link from the antenna arrangement 105 to antennas 103, 104 intended to communicate with the antenna arrangement 105.

Embodiments relating to further details of adjusting an antenna arrangement 105 for mitigating interference in a LOS MIMO system will now be disclosed.

There may be different ways to measure if the compensation for the interference caused by the at least one reflection is successful. According to one embodiment the distance $d_1$ is adjusted to compensate for interference so as to optimize a quality criterion for transmissions by the LOS MIMO system. On such quality criterion is the mean square error (MSE) obtained from transmissions on the LOS links. Another quality criterion is the MIMO condition number. Hence, the distance $d_1$ may be adjusted to compensate for interference to minimize a MIMO condition number of a channel of the LOS link.

Figure 11 shows simulation results of MIMO conditional number as a function of the distance, denoted h in Figure 2, of the object 201 reflecting all beams and main beams of the LOS MIMO system 200 with multi-path interference on all four paths. The reflected beam has 10 dB lower power compared to the main beam. As can be observed in Figure 11 the MIMO phase is very sensitive to the position (i.e., height) of the object 201. Figure 11 also shows the problem with sub-optimum MIMO antenna separation. With optimal antenna separation the conditional number is very insensitive to changes in the position of the reflection area while at 20% of optimum antenna separation, the conditional number becomes very sensitive to the reflector position.

Multi-path interference may be indicated by that the quality criterion, such as the MSE or conditional number, varies whilst moving at least one antenna 101, 102 on a scale much smaller than the antenna separation. That is, the interference caused by the at least one reflection (by object 201) may indicated by that the MSE, or MIMO conditional number, varies whilst the distance $d_1$ between the two antennas 101, 102 is varied on a scale smaller than an antenna separation of the two antennas (i.e., smaller than a separation between the antennas 101, 102 of the antenna arrangement 105).

Reference is now made to Figure 9 illustrating methods for adjusting an antenna arrangement 105 for mitigating interference in a LOS MIMO system according to further embodiments.

The adjusting of the distance $d_1$ between the two antennas 101, 102 of the antenna arrangement 105 may be preceded by an initial adjustment. There may be different ways to perform this initial adjustment. Embodiment relating thereto will now be described.

According one embodiment the step S108 of adjusting is preceded by, in a step S102, initially adjust the distance $d_1$ to an initial distance d. This initial distance d is dependent on the distance $D_1$ from the antenna arrangement 105 to the antennas 103, 104 intended to communicate with the antenna arrangement 105 over the LOS link.

The initial distance d may also be dependent on the carrier frequency /used for communication by the LOS MIMO system 100, 200. According to one particular embodiment the initial distance d is adjusted to

$$d = \sqrt{\frac{D_1 \cdot c}{2f}},$$

where d is the initial distance between the two antennas 101, 102, where $D_1$ is the distance between the two antennas 101, 102 and the antennas 103, 104 intended to communicate with the antenna arrangement 105, where c denotes speed of light in air, and where $f$ is the carrier frequency.

Alternatively, the initial distance d between antennas 101, 102 of the first antenna arrangement 105 is adjusted based on the distance $d_2$ between antennas 104, 105 of the antenna arrangement 106 such that the product $d \cdot d_2$ fulfills a criterion. Particularly, according to one particular embodiment the initial distance d is adjusted such that

$$d \cdot d_2 = \frac{D_1 \cdot c}{2f}.$$

According to another particular embodiment where the product $d \cdot d_2$ fulfills a criterion the initial distance d is adjusted such that the product of the first distance d between antennas 101, 102 of the first antenna arrangement 105 and the second distance $d_2$ between antennas 104, 105 of a second antenna arrangement 106, where the distance d is taken along a first line 107 and where the second distance $d_2$ is taken along a second line 108, is proportional to the distance $D_1$ between the antenna arrangements 105, 105, where the distance $D_1$ is taken along an LOS direction 110, and inversely proportional to cosine of a first angle $\theta_1$ and cosine of a second angle $\theta_2$, wherein the first angle $\theta_1$ represents angular deviation of the first line 107 from the normal 109 to the LOS direction 110, and wherein the second angle $\theta_2$ represents angular deviation of the second line 108 from the normal 109 to the LOS direction 110, see Figure 1.

There may be different ways to relate the adjustment distance ε to the initial distance d. For example, the distance $d_1$ may, during the initial adjusting be adjusted longer than the adjustment distance ε.

Figure 4(a) schematically illustrates two antennas 101, 102 of the antenna arrangement 105 being separated a distance $d_1$. As illustrated in Figure 4(b), upon having performed initial adjustment as in step S102 the two antennas 101, 102 of the antenna arrangement 105 are separated an initial distance d. Upon having performed adjustment as in step S108 the two antennas 101, 102 of the antenna arrangement 105 are separated a distance $d \pm \varepsilon$, see Figure 4(c). As noted above, step S102 is optional and hence the adjustment made in Figure 4(c) may instead be performed such that the two antennas 101,102 of the antenna arrangement 105 are separated a distance $d_1 \pm \varepsilon$.

Further ways to relate the adjustment distance ε to parameters of the LOS MIMO system 100, 200 will now be disclosed.

For example, for LOS MIMO systems 100, 200 operating at high carrier frequency, such as $f > 30$ GHz, the required movement can be less than a decimeter depending on system geometries. Hence, in embodiments where the antenna arrangement 100, 200 is configured to communicate using a carrier frequency $f$ above 30 GHz the adjustment distance ε may be less than one decimeter.

For example, for LOS MIMO systems 100, 200 operating at lower frequencies the required movement can be larger but still only a fraction of the antenna separation. Hence, the adjustment distance ε may be less than a fraction of the initial distance $d$.

There may be different occasions when the distance $d_1$ should be adjusted as in step S108. Different embodiments relating thereto will now be described in turn.

For example, provided the reflection (as caused by object 201) is stable over time, optimization of the distance

$d_1$ can be performed directly after installation of the antenna arrangement 105, for example by minimizing the MSE values obtained from the LOS MIMO system 100, 200. Hence, according to an embodiment the adjustment distance $\varepsilon$ is determined and fixed during installation of the antenna arrangement 105.

The herein disclosed means for adjusting the antenna arrangement 105 for mitigating interference in a LOS MIMO system 100, 200 can further be utilized for scanning an installed link for detection of possible multi-path interference. Thus, additionally or alternatively, in order to catch time varying reflections it might be necessary to monitor the performance (such as MIMO conditional number, MSE and/or MIMO phase) of an already installed antenna arrangement 105. Hence, according to one embodiment the step of adjusting the distance $d_1$ to compensate for interference comprises, in a step S108a, moving at least one of the two antennas 101, 102 so as to vary the distance $d_1$ over a range from a first end-point to a second end-point. The adjustment distance $\varepsilon$ may be adjusted over time in response to receiving control signalling from the antenna arrangement. Continuous optimization of the adjustment distance $\varepsilon$ is thereby enabled.

By moving one or more antennas 101, 102 whilst recording some quality measure, such as the MIMO conditional number, MSE and/or MIMO phase, multipath interference can be manifested by a significant change in the quality measure. Hence, according to an embodiment the method further comprises, in a step S108b, obtaining, during the above disclosed moving, quality values of transmissions over the LOS link. Each quality value is associated with a unique distance between the two antennas 101, 102 such that quality can be determined as a function of distance. The method may then comprise, in a step S108d, determining the adjustment distance $\varepsilon$ based on the quality values. Hence, the adjustment distance $\varepsilon$ may be determined as the distance that yields the best quality measure. In this respect it should be noted that a large quality measure corresponds to a low MSE and a low MIMO conditional number.

In order to catch time varying reflections it might be necessary to monitor the quality measure of an installed LOS MIMO system 100, 200 over time and correlate variations with e.g. weather data in order to find patterns in the system performance. The variations in quality measure over time and/or distance may therefore be correlated with environmental data (such as weather data, infrastructure data, etc.). Hence, according to an embodiment the method further comprises, in a step S108c, obtaining, during the above disclosed moving, environmental information impacting the LOS MIMO system 100, 200. The method may then comprise, in a step S108e, determining the adjustment distance $\varepsilon$ also based on the environmental information. Examples of environmental information include, but are not limited to, weather conditions, and the location of the interference (such as on a mountain top, on a building, trees, water body, etc.).

For example, the geometries of the LOS MIMO system 100, 200 may be analysed in order to enable identification of the presence of multipath interference. The geometries of the LOS MIMO system 100, 200 define one example of environmental information. Hence, according to an embodiment the method further comprises, in a step S104, obtaining environmental information impacting the LOS link. The method may then comprise, in a step S106, determining a need to alter the adjustment distance $\varepsilon$ to compensate for interference as a result thereof. Hence, steps S104 and S106 may be regarded as triggers for performing step S108. By moving one or more antenna 101, 102 whilst monitoring some quality measure, multipath interference is manifested by a significant change in quality measure. Without multipath interference, there should only be a very small change in the quality measure when the one or more antenna 101, 102 is moved a small distance compared to the antenna separation; a change in the quality measure indicates the presence of multi-path interference.

The adjustment distance $\varepsilon$ may be altered in at least one of vertical and horizontal direction. There may be different ways to move at least one of the two antennas 101, 102. Different embodiments relating thereto will now be described in turn.

For example, to enable the distance $d_1$ between the two antennas 101, 102 of the antenna arrangement 105 to be adjusted, one or more of the antennas 101, 102 should be mounted in such way that the antenna can be moved relatively easy in at least horizontal and/or vertical direction. This can be achieved by means of a ladder rack or wire controlled fixture with a suitable length of stroke. Hence, according to an embodiment the antenna arrangement 105 comprises a ladder rack or fixture 303. The two antennas 101, 102 may then be arranged movable on this ladder rack or fixture 303.

The fixture can be moved by means of a motor 302 in one or more directions. A motorized system would not only simplify optimization but also enable continuous optimization with changing multi-path conditions. Hence, according to an embodiment the antenna arrangement 105 comprises a motor 302, and the motor 302 is configured to move at least one of the two antennas 101, 102. The adjustment distance $\varepsilon$ may be altered in response to the antenna arrangement 105 receiving user input. For example the movement of an antenna 101, 102 can be made by hand using an antenna fixture that allows adjustment in horizontal and/or vertical direction.

Although the thus far presented embodiments have been disclosed in illustrative scenarios where only one antenna 101, 102 of the antenna arrangement 105 is moved, it is noted that it indeed may be sufficient to move only one antenna 101, 102 of the antenna arrangement 105. But depending on the interference condition at least two, or even all, antennas 102 of the antenna arrangement 105 might have to be moved. Hence a further adjustment distance may be adjusted to compensate for interference between two or more further pairwise antennas of the antenna arrangement 105.

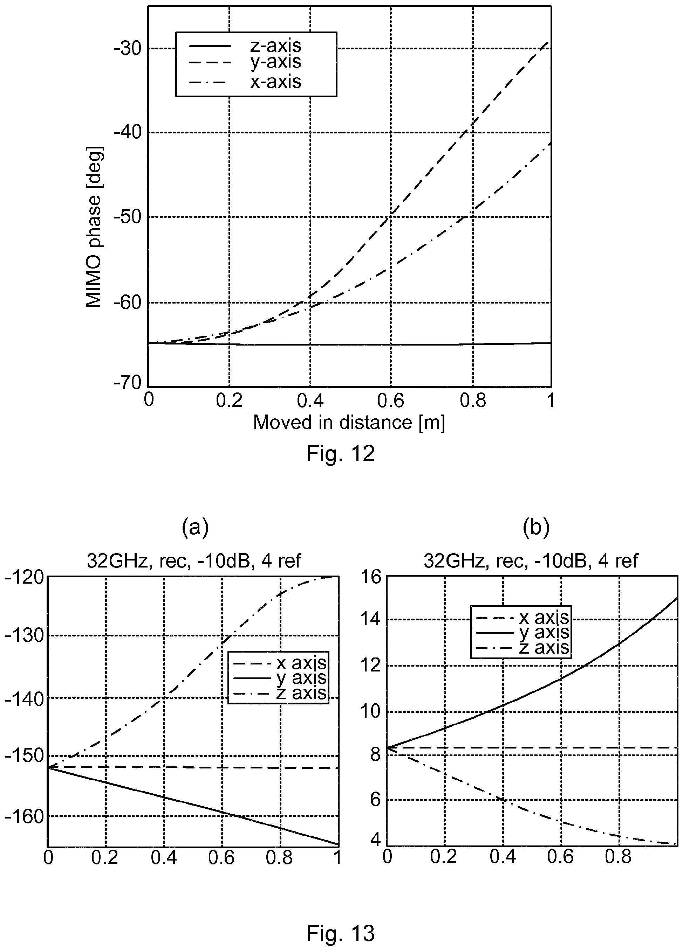

Simulation results will now be discussed with references to Figures 12, 13, 14 and 15. As the skilled person understands, the actual numbers shown in the figures depend heavily on the system geometries and properties of the reflecting surface (as defined by object 201).

Figure 12 shows the impact of moving one antenna 101, 102 in presence of a 10 dB lower second path generated by an object 201 placed 10 m below the main paths. Particularly, Figure 12 shows change in MIMO phase of an 8 GHz LOS MIMO system 100, 200 when one antenna 101 is moved in horizontal direction (x), vertical direction (z), and LOS link-direction (y), respectively. Movement in the vertical and horizontal directions is much more efficient than moving in the direction of the LOS link.

Figures 13(a) and 13(b) show the impact on the MIMO phase and conditional number from movement of one antenna 101, 102 in the vertical direction of a LOS MIMO system 100, 200 operating at 32 GHz with 30% horizontal antenna separation of optimal separation with multi-path interference on all four paths with -10 dB lower power compared to the main paths. Figure 13(a) shows the effect of moving one antenna 101, 102 in the different directions on the MIMO phase. Figure 13(b) shows the corresponding impact on the MIMO conditional number.

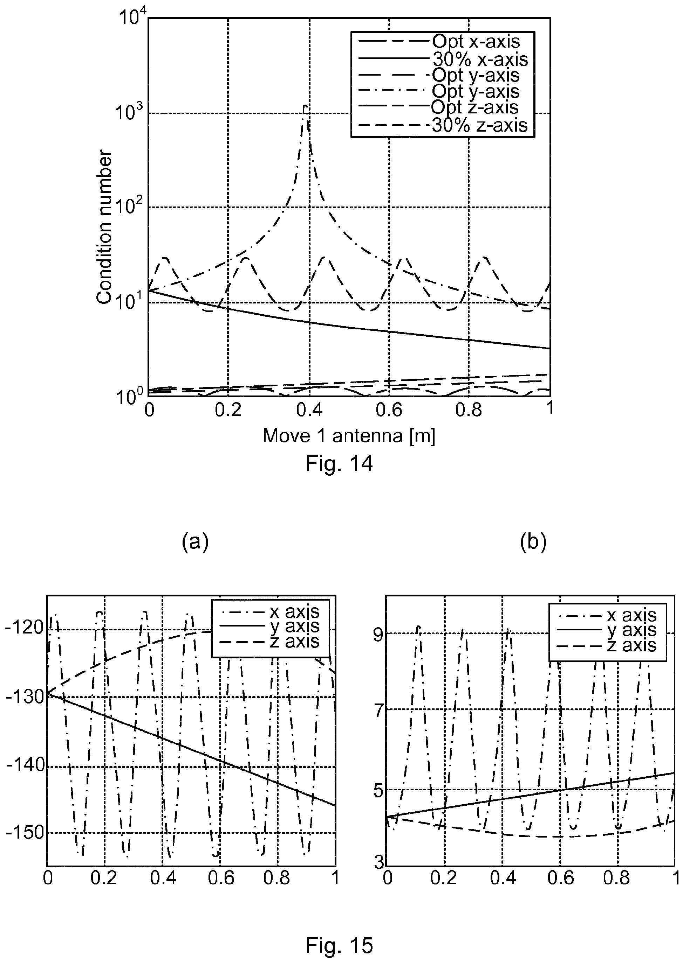

Figure 14 shows another example of the variation in conditional number when moving one antenna, such as either antenna 101, or antenna 102 in horizontal direction (x), vertical direction (z), and LOS link-direction (y). In the example of Figure 14 movement occurs in a 7 km long 2-by-2 MIMO LOS link operating at 32 GHz for optimal antenna separation and for 30% of optimum separation. For optimum antenna separation the movement up to 1 meter has negligible impact on the conditional number, while for 30% antenna separation the variation can be large.

Figures 15(a) and 15(b) show the effect from multi-path on the MIMO phase and conditional number when only one path is affected by multi-path interference in a 2-by-2 LOS MIMO system 100, 200 operating at 32 GHz. Figure 15(a) shows the effect on the MIMO phase. Figure 15(b) shows the corresponding impact on the MIMO conditional number. Interference in only one path creates a stronger asymmetry in the channel and is thus more sever than when interference affects all channels simultaneously. This indicates the importance of optimizing the antenna distance in presence of multipath interference.

In summary, there have been proposed mechanisms for adjusting an antenna arrangement 105 for mitigating interference in a LOS MIMO system 100, 200 where the position of one or more antennas 101, 102 in an antenna arrangement 105 is moved on a small scale relative the antenna separation $d_1$ in order to optimize link performance according to a performance measure. The optimization can be made upon installation and/or when temporary reduced performance is detected, e.g. during and/or after rain. The herein proposed mechanisms can also be used to identify a system suffering from multipath interference. In the rain pond example mentioned above, the LOS MIMO system 100, 200 can probably be optimized in terms of the distance $d_1$ between two antennas 101, 102 of the antenna arrangement 105 once the situation causing the interference occurs (i.e., during or just after a rainfall) and then be left unattended. In other scenarios it may be possible to perform such optimization already at installation of the antenna arrangement 105. One example of such a scenario is where a reflection causing interference is generated by an object 201 defined by a nearby building or other fixed structure.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

**Claims**

1. A method for adjusting an antenna arrangement (105) for mitigating interference in a line of sight, LOS, multiple input multiple output, MIMO, system (100, 200), the antenna arrangement comprising at least two antennas (101, 102), the method comprising:

   - adjusting (S108) a distance ($d_1$) between two antennas (101, 102) of the antenna arrangement by an adjustment distance ($\varepsilon$) to compensate for interference caused by at least one reflection, for example caused by an object (201), occurring along a line of sight link from the antenna arrangement to antennas (103, 104) intended to communicate with the antenna arrangement, wherein adjusting the distance ($d_1$) comprises:

      o moving (S108a) at least one of the two antennas so as to vary the distance over a range from a first end-point to a second end-point;

   - obtaining (S108b, S108c), during said moving,

      o quality values of transmissions over the line of sight link, each quality value being associated with a unique distance between the two antennas;

o environmental information impacting the LOS MIMO system;

- determining (S108d) the adjustment distance ($\varepsilon$) based on the quality values and the environmental information.

2. The method according to claim 1, wherein said distance ($d_1$) is adjusted to compensate for interference so as to optimize a quality criterion for transmissions by the LOS MIMO system.

3. The method according to claim 2, wherein said interference caused by the at least one reflection is indicated by mean square error, MSE, variation whilst the distance ($d_1$) between the two antennas is varied on a scale smaller than an antenna separation of the two antennas.

4. The method according to any of the preceding claims, wherein said distance ($d_1$) is adjusted to compensate for interference to minimize a MIMO condition number of a channel of the line of sight link.

5. The method according to any preceding claims, wherein the antenna arrangement comprises a motor (302), and wherein at least one of the two antennas is moved by means of said motor.

6. The method according to any of the preceding claims, wherein the adjustment distance ($\varepsilon$) is determined and fixed during installation of the antenna arrangement.

7. The method according to any of the preceding claims, wherein the adjustment distance ($\varepsilon$) is adjusted over time in response to receiving control signalling from the antenna arrangement.

8. The method according to any of the preceding claims, wherein the adjustment distance ($\varepsilon$) is altered in response to the antenna arrangement receiving user input.

9. The method according to any of the preceding claims, further comprising:

obtaining (S104) environmental information impacting the line of sight link; and
determining (S106) a need to alter the adjustment distance ($\varepsilon$) to compensate for interference as a result thereof.

10. The method according to any of the preceding claims, wherein the antenna arrangement comprises a ladder rack or fixture (303), and wherein the two antennas are arranged movable on said ladder rack or fixture.

11. The method according to any of the preceding claims, wherein the adjustment distance ($\varepsilon$) is altered in at least one of vertical and horizontal direction.

12. The method according to any of the preceding claims, wherein a further adjustment distance is adjusted to compensate for interference between two or more further pairwise antennas of the antenna arrangement.

13. The method according to any of the preceding claims, wherein said adjusting is preceded by a step of:
initially adjusting (S102) said distance ($d_1$) to an initial distance (d) depending on a distance ($D_1$) from the antenna arrangement to the antennas intended to communicate with the antenna arrangement over the line of sight link.

14. The method according to claim 13, wherein said initial distance (d) is dependent also on a carrier frequency, $f$ used for communication by the LOS MIMO system.

15. The method according to claim 14, wherein said initial distance (d) is adjusted to

$$d = \sqrt{\frac{D_1 \cdot c}{2f}},$$

where d is the initial distance between the two antennas, $D_1$ is the distance between the two antennas and the antennas intended to communicate with the antenna arrangement, c denotes speed of light in air, and $f$ is the carrier frequency.

16. The method according to claim 14, wherein said initial distance (d) is adjusted based on a distance ($d_2$) between

antennas (104, 105) of a further antenna arrangement (106) such that a product ($d \cdot d_2$) of said initial distance and said distance between said antennas of said further antenna arrangement fulfills a criterion.

17. The method according to any of claim 13 to 16, wherein said distance ($d_1$) during said initial adjusting is adjusted longer than said adjustment distance ($\varepsilon$).

18. The method according to any of claim 13 to 17, wherein the antenna arrangement is configured to communicate using a carrier frequency $f$ above 30 GHz, and wherein the adjustment distance ($\varepsilon$) is less than one decimeter.

19. The method according to any of claim 13 to 18, wherein the adjustment distance ($\varepsilon$) is less than a fraction of said initial distance (d).

20. An antenna arrangement (105) for mitigating interference in a line of sight, LOS, multiple input multiple output, MIMO, system (100, 200), the antenna arrangement comprising:

   - at least two antennas (101, 102); and
   - the antenna arrangement being configured with means to enable adjustment of a distance ($d_1$) between two antennas (101, 102) of the antenna arrangement by an adjustment distance ($\varepsilon$) to compensate for interference caused by at least one reflection, for example caused by an object (201), occurring along a line of sight link from the antenna arrangement to antennas (103, 104) intended to communicate with the antenna arrangement, wherein the means to enable adjustment of the distance ($d_1$) comprises means to enable movement of at least one of the two antennas so as to vary the distance over a range from a first end-point to a second end-point; means to obtain, during said movement,

      ■ quality values of transmissions over the line of sight link, each quality value being associated with a unique distance between the two antennas;
      ■ environmental information impacting the LOS MIMO system; and means to determine the adjustment distance ($\varepsilon$) based on the quality values and the environmental information.

**Patentansprüche**

1. Verfahren zum Einstellen einer Antennenanordnung (105) zum Verringern von Interferenz in einem Sichtlinien-, LOS, Mehrfach-Eingang-Mehrfach-Ausgang-, MIMO, System (100, 200), wobei die Antennenanordnung mindestens zwei Antennen (101, 102) umfasst, das Verfahren umfassend:

   - Einstellen (S108) einer Distanz ($d_1$) zwischen zwei Antennen (101, 102) der Antennenanordnung durch eine Einstellungsdistanz ($\varepsilon$), um Interferenz auszugleichen, die durch mindestens eine Reflexion verursacht wird, zum Beispiel durch ein Objekt (201) verursacht wird, die entlang einer Sichtlinienverbindung von der Antennenanordnung zu Antennen (103, 104) auftritt, die mit der Antennenanordnung kommunizieren sollen, wobei Einstellen der Distanz ($d_1$) umfasst:

      ◦ Bewegen (S108a) mindestens einer der zwei Antennen, um so die Distanz über einen Bereich von einem ersten Endpunkt zu einem zweiten Endpunkt zu variieren;

   - Erhalten (S108b, S108c), während der Bewegung,

      ◦ von Qualitätswerten von Übertragungen über die Sichtlinienverbindung, wobei jedem Qualitätswert eine einzigartige Distanz zwischen den zwei Antennen zugeordnet ist;
      ◦ von Umgebungsinformationen, die Auswirkung auf das LOS MIMO-System haben;

   - Bestimmen (S108d) der Einstellungsdistanz ($\varepsilon$) basierend auf den Qualitätswerten und den Umgebungsinformationen.

2. Verfahren nach Anspruch 1, wobei die Distanz ($d_1$) eingestellt ist, um Interferenz auszugleichen, um so ein Qualitätskriterium für Übertragungen durch das LOS MIMO-System zu optimieren.

3. Verfahren nach Anspruch 2, wobei die Interferenz, die durch die mindestens eine Reflexion verursacht wird, durch Variation des mittleren quadratischen Fehlers, MSE, angegeben ist, während die Distanz ($d_1$) zwischen zwei Antennen auf einer Skala variiert wird, die kleiner als ein Antennenabstand der zwei Antennen ist.

4. Verfahren nach einem der vorstehenden Ansprüche, wobei die Distanz ($d_1$) eingestellt ist, um Interferenz auszugleichen, um eine MIMO-Bedingungszahl eines Kanals der Sichtlinienverbindung zu minimieren.

5. Verfahren nach einem der vorstehenden Ansprüche, wobei die Antennenanordnung einen Motor (302) umfasst und wobei mindestens eine der zwei Antennen durch den Motor bewegt wird.

6. Verfahren nach einem der vorstehenden Ansprüche, wobei die Einstellungsdistanz ($\varepsilon$) während Installation der Antennenanordnung bestimmt und festgelegt wird.

7. Verfahren nach einem der vorstehenden Ansprüche, wobei die Einstellungsdistanz ($\varepsilon$) im Laufe der Zeit in Antwort auf Empfang einer Steuersignalisierung von der Antennenanordnung eingestellt wird.

8. Verfahren nach einem der vorstehenden Ansprüche, wobei die Einstellungsdistanz ($\varepsilon$) in Antwort darauf eingestellt wird, dass die Antennenanordnung Benutzereingabe empfängt.

9. Verfahren nach einem der vorstehenden Ansprüche, weiter umfassend:

Erhalten (S104) von Umgebungsinformationen, die Auswirkungen auf die Sichtlinienverbindung haben; und Bestimmen (S106) infolgedessen einer Notwendigkeit, die Einstellungsdistanz ($\varepsilon$) zu ändern, um Interferenz auszugleichen.

10. Verfahren nach einem der vorstehenden Ansprüche, wobei die Antennenanordnung ein Leitergestell oder eine Fixierung (303) umfasst und wobei die zwei Antennen an dem Leitergestell oder der Fixierung beweglich angeordnet sind.

11. Verfahren nach einem der vorstehenden Ansprüche, wobei die Einstellungsdistanz ($\varepsilon$) in mindestens einer von vertikaler und horizontaler Richtung geändert wird.

12. Verfahren nach einem der vorstehenden Ansprüche, wobei eine weitere Einstellungsdistanz eingestellt ist, um Interferenz zwischen zwei oder mehr weiteren paarweisen Antennen der Antennenanordnung auszugleichen.

13. Verfahren nach einem der vorstehenden Ansprüche, wobei dem Einstellen ein Schritt vorangeht zum: anfänglichen Einstellen (S102) der Distanz ($d_1$) auf eine anfängliche Distanz (d) abhängig von einer Distanz ($D_1$) von der Antennenanordnung zu den Antennen, die mit der Antennenanordnung über die Sichtlinienverbindung kommunizieren sollen.

14. Verfahren nach Anspruch 13, wobei die anfängliche Distanz (d) auch von einer Trägerfrequenz, *f*, abhängig ist, die zur Kommunikation durch das LOS MIMO-System verwendet wird.

15. Verfahren nach Anspruch 14, wobei die anfängliche Distanz (d) eingestellt ist auf

$$d = \sqrt{\frac{D_1 . c}{2f}},$$

wo d die anfängliche Distanz zwischen den zwei Antennen ist, $D_1$ die Distanz zwischen den zwei Antennen und den Antennen ist, die mit der Antennenanordnung kommunizieren sollen, c die Lichtgeschwindigkeit in Luft angibt und *f* die Trägerfrequenz ist.

16. Verfahren nach Anspruch 14, wobei die anfängliche Distanz (d) basierend auf einer Distanz ($d_2$) zwischen Antennen (104, 105) einer weiteren Antennenanordnung (106) eingestellt ist, sodass ein Produkt ($d.d_2$) der anfänglichen Distanz und der Distanz zwischen den Antennen der weiteren Antennenanordnung ein Kriterium erfüllt.

17. Verfahren nach einem der Ansprüche 13 bis 16, wobei die Distanz ($d_1$) während der anfänglichen Einstellung länger eingestellt ist als die Einstellungsdistanz ($\varepsilon$).

**18.** Verfahren nach einem der Ansprüche 13 bis 17, wobei die Antennenanordnung konfiguriert ist, unter Verwendung einer trägerfrequenz $f$ über 30 GHz zu kommunizieren und wobei die Einstellungsdistanz ($\varepsilon$) kleiner als ein Dezimeter ist.

**19.** Verfahren nach einem der Ansprüche 13 bis 18, wobei die Einstellungsdistanz ($\varepsilon$) kleiner als ein Bruchteil der anfänglichen Distanz ($d$) ist.

**20.** Antennenanordnung (105) zum Verringern von Interferenz in einem Sichtlinien-, LOS, Mehrfach-Eingang-Mehrfach-Ausgang-, MIMO, System (100, 200), wobei die Antennenanordnung umfasst:

- mindestens zwei Antennen (101, 102); und
- wobei die Antennenanordnung mit Mitteln konfiguriert ist, um Einstellen einer Distanz ($d_1$) zwischen zwei Antennen (101, 102) der Antennenanordnung durch eine Einstellungsdistanz ($\varepsilon$) zu ermöglichen, um Interferenz auszugleichen, die durch mindestens eine Reflexion verursacht wird, zum Beispiel durch ein Objekt (201) verursacht wird, die entlang einer Sichtlinienverbindung von der Antennenanordnung zu Antennen (103, 104) auftritt, die mit der Antennenanordnung kommunizieren sollen, wobei das Mittel, das Einstellen der Distanz ($d_1$) ermöglicht, umfasst:

Mittel, um Bewegung mindestens einer der zwei Antennen zu ermöglichen, um so die Distanz über einen Bereich von einem ersten Endpunkt zu einem zweiten Endpunkt zu variieren;
Mittel zum Erhalten während der Bewegung

• von Qualitätswerten von Übertragungen über die Sichtlinienverbindung, wobei jedem Qualitätswert eine einzigartige Distanz zwischen den zwei Antennen zugeordnet ist;
• von Umgebungsinformationen, die Auswirkung auf das LOS MIMO-System haben;und
Mittel zum Bestimmen der Einstellungsdistanz ($\varepsilon$) basierend auf den Qualitätswerten und den Umgebungsinformationen.

## Revendications

**1.** Procédé d'ajustement d'un agencement d'antennes (105) pour atténuer les interférences dans un système (100, 200) à entrées multiples et sorties multiples, MIMO, en visibilité directe, LOS, l'agencement d'antennes comprenant au moins deux antennes (101, 102), le procédé comprenant :

- l'ajustement (S108) d'une distance (d1) entre deux antennes (101, 102) de l'agencement d'antennes d'une distance d'ajustement ($\varepsilon$) pour compenser les interférences causées par au moins une réflexion, par exemple causée par un objet (201), survenant le long d'une liaison en visibilité directe de l'agencement d'antennes aux antennes (103, 104), destinée à communiquer avec l'agencement d'antennes, dans lequel l'ajustement de la distance ($d_1$) comprend :

◦ le déplacement (S108a) d'au moins l'une des deux antennes de façon à faire varier la distance sur une plage allant d'un premier point d'extrémité à un second point d'extrémité ;

- l'obtention (S108b, S108c), lors dudit déplacement,

◦ de valeurs de qualité de transmissions sur la liaison en visibilité directe, chaque valeur de qualité étant associée à une distance unique entre les deux antennes ;
◦ d'informations environnementales ayant une incidence sur le système MIMO LOS;

- la détermination (S108d) de la distance d'ajustement ($\varepsilon$) sur la base des valeurs de qualité et des informations environnementales.

**2.** Procédé selon la revendication 1, dans lequel ladite distance ($d_1$) est ajustée pour compenser les interférences de façon à optimiser un critère de qualité pour les transmissions par le système MIMO LOS.

**3.** Procédé selon la revendication 2, dans lequel lesdites interférences causées par l'au moins une réflexion sont indiquées par une variation d'erreur quadratique moyenne, MSE, tandis que la distance ($d_1$) entre les deux antennes varie sur une échelle inférieure à une séparation d'antenne des deux antennes.

4. Procédé selon l'une quelconque des revendications précédentes, dans lequel ladite distance ($d_1$) est ajustée pour compenser les interférences afin de minimiser un nombre de conditions MIMO d'un canal de la liaison en visibilité directe.

5. Procédé selon l'une quelconque des revendications précédentes, dans lequel l'agencement d'antennes comprend un moteur (302), et dans lequel au moins l'une des deux antennes est déplacée au moyen dudit moteur.

6. Procédé selon l'une quelconque des revendications précédentes, dans lequel la distance d'ajustement (ε) est déterminée et fixée pendant l'installation de l'agencement d'antennes.

7. Procédé selon l'une quelconque des revendications précédentes, dans lequel la distance d'ajustement (ε) est ajustée dans le temps en réponse à la réception d'une signalisation de commande provenant de l'agencement d'antennes.

8. Procédé selon l'une quelconque des revendications précédentes, dans lequel la distance d'ajustement (ε) est modifiée en réponse à l'agencement d'antennes recevant l'entrée utilisateur.

9. Procédé selon l'une quelconque des revendications précédentes, comprenant en outre :

l'obtention (S104) d'informations environnementales ayant une incidence sur la liaison en visibilité directe ; et
la détermination (S106) d'une nécessité de modifier la distance d'ajustement (ε) pour compenser les interférences qui en résultent.

10. Procédé selon l'une quelconque des revendications précédentes, dans lequel l'agencement d'antennes comprend un support ou une fixation d'échelle (303), et dans lequel les deux antennes sont agencées de façon mobile sur ledit support ou fixation d'échelle.

11. Procédé selon l'une quelconque des revendications précédentes, dans lequel la distance d'ajustement (ε) est modifiée dans au moins l'une des directions verticale et horizontale.

12. Procédé selon l'une quelconque des revendications précédentes, dans lequel une distance d'ajustement supplémentaire est ajustée pour compenser les interférences entre deux ou plusieurs antennes par paire supplémentaires de l'agencement d'antennes.

13. Procédé selon l'une quelconque des revendications précédentes, dans lequel ledit ajustement est précédé d'une étape :
d'ajustement (S102) de manière initiale de ladite distance ($d_1$) à une distance initiale (d) en fonction d'une distance ($D_1$) de l'agencement d'antennes aux antennes destinées à communiquer avec l'agencement d'antennes par la liaison en visibilité directe.

14. Procédé selon la revendication 13, dans lequel ladite distance initiale (d) dépend également d'une fréquence porteuse, $f$, utilisée à des fins de communication par le système MIMO LOS.

15. Procédé selon la revendication 14, dans lequel ladite distance initiale (d) est ajustée à

$$d = \sqrt{\frac{D_1 \cdot c}{2f}},$$

où $d$ est la distance initiale entre les deux antennes, $D_1$ est la distance entre les deux antennes et les antennes destinées à communiquer avec l'agencement d'antennes, c désigne la vitesse de la lumière dans l'air et $f$ est la fréquence porteuse.

16. Procédé selon la revendication 14, dans lequel ladite distance initiale (d) est ajustée sur la base d'une distance ($d_2$) entre des antennes (104, 105) d'un agencement d'antennes supplémentaire (106) de sorte qu'un produit ($d \cdot d_2$) de ladite distance initiale et de ladite distance entre lesdites antennes dudit agencement d'antennes supplémentaire remplit un critère.

**17.** Procédé selon l'une quelconque des revendications 13 à 16, dans lequel ladite distance ($d_1$) pendant ledit ajustement initial est ajustée plus longtemps que ladite distance d'ajustement ($\varepsilon$).

**18.** Procédé selon l'une quelconque des revendications 13 à 17, dans lequel l'agencement d'antennes est configuré pour communiquer en utilisant une fréquence porteuse *f* supérieure à 30 GHz, et dans lequel la distance d'ajustement ($\varepsilon$) est inférieure à un décimètre.

**19.** Procédé selon l'une quelconque des revendications 13 à 18, dans lequel la distance d'ajustement ($\varepsilon$) est inférieure à une fraction de ladite distance initiale (*d*).

**20.** Agencement d'antennes (105) pour atténuer les interférences dans un système (100, 200) à entrées multiples et sorties multiples, MIMO, en visibilité directe, LOS, l'agencement d'antennes comprenant :

- au moins deux antennes (101, 102) ; et
- l'agencement d'antennes étant configuré avec des moyens permettant l'ajustement d'une distance ($d_1$) entre deux antennes (101, 102) de l'agencement d'antennes d'une distance d'ajustement ($\varepsilon$) pour compenser les interférences causées par au moins une réflexion, par exemple causées par un objet (201), survenant le long d'une liaison en visibilité directe de l'agencement d'antennes aux antennes (103, 104) destinées à communiquer avec l'agencement d'antennes, dans lequel les moyens permettant l'ajustement de la distance ($d_1$) comprennent des moyens permettant le mouvement d'au moins une des deux antennes de façon à faire varier la distance sur une plage allant d'un premier point d'extrémité à un second point d'extrémité ;
des moyens pour obtenir, pendant ledit mouvement,

  ◦ des valeurs de qualité de transmissions sur la liaison en visibilité directe, chaque valeur de qualité étant associée à une distance unique entre les deux antennes ;
  ◦ des informations environnementales ayant une incidence sur le système MIMO LOS; et

des moyens permettant de déterminer la distance d'ajustement ($\varepsilon$) sur la base des valeurs de qualité et des informations environnementales.

Fig. 1

Fig. 2

Fig. 3

Fig. 4

Fig. 5

Fig. 6

701

702

703

Fig. 7

START

S108
Adjust distance between
antennas

STOP

Fig. 8

S102
Initially adjust distance
between antennas

S104
Obtain environmental
information

S106
Determine need to alter
adjustment distance

S108
Adjust distance between
antennas

S108a
Move antenna(s)

S108b
Obtain quality values

S108c
Obtain environmental
information

S108d
Determine adjustment
distance

S108e
Determine adjustment
distance

Fig. 9

Sensitivity of MIMO phase disturbance

Fig. 10

Fig. 11

Fig. 12

(a)                                          (b)

Fig. 13

Fig. 14

(a)                                                      (b)

Fig. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7948444 B2

- WO 2013097888 A1

**Non-patent literature cited in the description**

- **TSUGUO MARU et al.** *PHY 44-1 - Line-of-Sight MIMO Transmission for Achieving High Capacity Fixed Point Microwave Radio Systems,* 31 March 2008